# EUROPEAN PATENT APPLICATION

(11) **EP 4 725 900 A1**
(43) Date of publication of application: **15.04.2026**
(21) Application number: 25720234.1
(22) Date of filing: 19.03.2025
(51) Int. Cl.: C01B 25/45, C01B 32/05, H01M 4/58, H01M 4/62, H01M 10/0525

(54) **MANGANESE IRON PHOSPHATE PRECURSOR AND LITHIUM MANGANESE IRON PHOSPHATE, AND PREPARATION METHODS THEREFOR AND USE THEREOF**

(30) Priority: 21.08.2024 CN 202411146592
(71) Applicant: Henan Kelong New Energy Co., Ltd., Xinxiang, Henan 453000 (CN)
(72) Inventor: CHENG, Di, Xinxiang Henan 453000 (CN); WANG, Shuai, Xinxiang Henan 453000 (CN); WANG, Yanping, Xinxiang Henan 453000 (CN); XU, Yunjun, Xinxiang Henan 453000 (CN)
(74) Representative: Studio Torta S.p.A.
(86) International application number: PCT/CN2025/083552
(87) International publication number: WO 2026/040398

(57) **Abstract**

Provided is a manganese iron phosphate precursor, lithium manganese iron phosphate, a preparation method therefor, and use thereof. First, a co-precipitation method is used to prepare a divalent manganese iron phosphate precursor, i.e. ammonium manganese iron phosphate, the precursor is then calcinated, dehydrated and deammoniated to produce manganese iron hydrogen phosphate, and then the manganese iron hydrogen phosphate and a lithium salt are mixed and sintered to prepare LMFP. In the preparation process of ammonium manganese iron phosphate, alkaline hazardous chemicals such as ammonia water, ammonium bicarbonate and sodium bicarbonate are not used, and only manganese, iron and phosphorus salts necessary for constituting the substance are used, and in the co-precipitation process, there is no need to introduce further additional impurity elements, and thus the prepared product has a high purity and a low impurity content, the process is simple and practical and has good reproducibility, atoms are uniformly dispersed, and finally a single crystal phase precursor compound ammonium manganese iron phosphate having a uniform morphology is formed.

## Description

The present application is based upon Chinese Application No. 202411146592.8, filed on 21 August 2024 and claims the right of priority thereof, and the disclosure of the Chinese application is incorporated herein again by reference in its entirety.

### Technical Field

The present disclosure relates to the technical field of positive electrode materials of lithium ion batteries, and in particular, to a manganese iron phosphate precursor, lithium manganese iron phosphate, a preparation method therefor and use thereof.

### Background

At present, lithium ion batteries are main power batteries, and positive electrode materials thereof mainly use lithium iron phosphate, ternary materials, lithium cobalt oxide, lithium manganese oxide, etc. Among them, lithium manganese iron phosphate (LMFP) is widely used in lithium ion battery positive electrodes due to its advantages of low costs, high safety, long cycle life, high voltage and wide source of raw materials. Lithium manganese iron phosphate has the advantages of both excellent rate performance of lithium iron phosphate and high voltage platform of lithium manganese phosphate, is gradually becoming an advanced choice to replace lithium iron phosphate, and will become an important choice in the future new energy vehicle and energy storage market.

Some studies have mixed a lithium source, a phosphorus source, iron oxide, manganese oxide, etc. and sintered them to obtain LMFP through a solid phase method. The element distribution is uneven, the ratio is poor, the structural stability is poor, and the electrical properties such as battery capacity and rate are poor. Some studies have used a wet co-precipitation method to prepare a trivalent manganese iron phosphate precursor, which was then mixed with a lithium source and roasted to obtain LMFP. The trivalent manganese iron phosphate precursor has poor process reproducibility and high energy consumption, which is not conducive to large-scale production. In addition, a reducing agent is required in the subsequent roasting process to reduce the Mn and Fe elements, which increases costs and reduces energy density. Manganese iron phosphate simultaneously contains three elements: Fe, Mn and P, whererin both Mn and Fe elements are divalent, and manganese iron phosphate have a suitable stoichiometric ratio and stable physical and chemical properties, and is therefore an ideal precursor for preparing lithium manganese iron phosphate.

Synthesis methods for LMFP positive electrode materials mainly include high temperature solid-state method and solution phase method. The solution phase method mainly includes a hydrothermal method and a co-precipitation method. The solid phase method mainly includes solid phase mixing a lithium source, a manganese source, an iron source and a phosphorus source, and then sintering at a high temperature to form lithium manganese iron phosphate. The solution phase method mainly includes uniformly mixing soluble raw materials in a solution to synthesize a product. Although the solid phase methods are simple, elements such as Mn and Fe cannot be uniformly mixed at an atomic level, and are difficult to be uniformly distributed in a main structure of LMFP, and as a result, the Jahn-Teller effect of Mn³⁺ is severe, and the cycle stability performance and the rate performance of batteries are affected. The solution phase method synthesis of lithium manganese iron phosphate can improve the uniformity of transition metals in LMFP. However, the hydrothermal method requires a high-temperature and high-pressure environment, has a high requirement for production equipment, and has problems of complicated production operations, poor safety, high energy consumption, low productivity, etc. In the co-precipitation method, a manganese iron phosphate precursor is first synthesized by using a wet process, and is then mixed and sintered with a lithium source. This synthetic route has mild conditions, and the elements of the prepared product are evenly distributed and the proportions are precisely adjustable, and thus it is currently a popular route. There are two types of precursors in the co-precipitation method, i.e. a divalent precursor and a trivalent precursor. The trivalent manganese iron phosphate precursor route requires oxidizing a metal to form manganese iron phosphate first, and then consuming a reducing agent for reduction in subsequent use. The process has poor reproducibility and is not conducive to large-scale production.

The patent with the grant publication patent number CN 118004990 B discloses a manganese iron phosphate precursor, lithium manganese iron phosphate and a preparation method therefor. The method for preparing a manganese iron phosphate precursor includes: performing high-speed stirring in a reaction kettle, successively adding a first mixed solution, a supplementary precipitant and a first doping additive for a synthesis reaction to obtain a manganese iron phosphate co-precipitate, and filtering, washing and drying a slurry comprising the manganese iron phosphate co-precipitate to obtain a manganese iron phosphate precursor, wherein the supplementary precipitant is ammonium bicarbonate or sodium bicarbonate, and the first doping additive is a titanium sulfate solution. The method for preparing lithium manganese iron phosphate includes: adding the manganese iron phosphate precursor, a lithium source, a carbon source, a second doping additive and water into a reaction kettle to prepare a slurry; and subjecting a slurry to grinding, spray-drying, high-temperature sintering and pulverization to obtain lithium manganese iron phosphate having a particle size D50 of 0.8 to 1.5 µm, wherein the second doping additive is magnesium oxide, and eventually, processing consistency and electrochemical properties of the lithium manganese iron phosphate can be improved. However, in the method, in the process of preparing the manganese iron phosphate precursor, an alkaline dangerous chemical such as ammonium bicarbonate or sodium bicarbonate is used, a phosphorus source needs to be additionally added, and impurities may be introduced due to the use of the supplementary precipitant and the first doping additive, which are not conducive to industrial popularization and application of the preparation process.

The patent application with the publication patent number CN 117886296 A discloses ammonium manganese iron phosphate, lithium manganese iron phosphate, a preparation method therefor and use thereof, wherein through a corrosion reaction of iron powder and manganese powder in water, a hydrolysis reaction of ammonium ions, and the regulation of the pH of the reaction system by ammonia water, metal ions are combined with NH₃ and PO₄³⁻ in the solution to form ammonium manganese iron phosphate, Fe and Mn can be completely converted into the product to achieve uniform mixing of Fe, Mn and P at the atomic level; and ammonium ions in the reaction solution can be recycled, greatly improving the atomic economy; and the ammonium manganese iron phosphate is calcinated to obtain manganese iron hydrogen phosphate, and then manganese iron hydrogen phosphate is calcined with a lithium source and a carbon source to finally obtain a lithium manganese iron phosphate material having spherical secondary particles, a high purity, a high tap density, a nanometer-scale particle size and uniform distribution, and good discharge specific capacity and rate performance, and when applied to lithium-ion batteries, the lithium manganese iron phosphate material can improve the electrochemical properties of lithium ion batteries. However, this method uses alkaline hazardous chemicals such as ammonia water in the process of preparing ammonium manganese iron phosphate, which is not conducive to the industrial popularization and application of the preparation process.

### Summary

Based on the disadvantages existing in the prior art, the present disclosure provides a manganese iron phosphate precursor, lithium manganese iron phosphate and a preparation method therefor. In the method, a co-precipitation method is first used to prepare a divalent manganese iron phosphate precursor, i.e. ammonium manganese iron phosphate, and after calcination, dehydration and deamination are performed, manganese iron hydrogen phosphate is generated, and then the manganese iron hydrogen phosphate and a lithium salt are mixed and sintered to prepare LMFP. In the preparation process of ammonium manganese iron phosphate, alkaline hazardous chemicals such as ammonia water, ammonium bicarbonate and sodium bicarbonate are not used, and only manganese, iron and phosphorus salts necessary for constituting the substance are used, and in the co-precipitation process, there is no need to introduce further additional impurity elements, and thus the prepared product has a high purity and a low impurity content, the process is simple and practical and has good reproducibility, atoms are uniformly dispersed, and finally a single crystal phase precursor compound ammonium manganese iron phosphate having a uniform morphology is formed. In the preparation process of manganese iron hydrogen phosphate by deamination and dehydration of ammonium manganese iron phosphate, a first carbon source and ammonium manganese iron phosphate are mixed and calcinated, which can effectively avoid the oxidation of elements such as Mn and Fe, and in the subsequent preparation stage of lithium manganese iron phosphate, carbon and other elements that enhance the conductivity of the material are introduced in advance, which can effectively improve the electrochemical properties such as capacity and rate performance of the material while the amount of inert gases such as nitrogen can be significantly reduced, the operation safety can be improved, the costs can be reduced, and the volatile ammonia can be recycled to achieve green production. Finally, manganese iron hydrogen phosphate is calcinated with the lithium source and a second carbon source. The finally prepared lithium manganese iron phosphate has a high purity, low costs, a high compaction density, good electrochemical properties such as capacity and rate performance and an ideal energy density.

The present disclosure adopts the following technical solution to solve the described technical problem, and provides a method for preparing a manganese iron phosphate precursor, including the following specific preparation steps: step S1, respectively formulating a mixed manganese-iron solution, a first precipitant solution and a second precipitant solution, wherein in the mixed manganese-iron solution, manganese salt is one or more of manganese sulfate, manganese nitrate, manganese chloride or manganese acetate, iron salt is one or more of ferrous sulfate, ferrous nitrate or ferrous chloride, first precipitant is one or more of ammonium dihydrogen phosphate, diammonium hydrogen phosphate or ammonium phosphate, and second precipitant is one or more of ammonium dihydrogen phosphate, diammonium hydrogen phosphate, ammonium phosphate, sodium dihydrogen phosphate, disodium hydrogen phosphate or potassium dihydrogen phosphate; and step S2, adding pure water and the first precipitant solution into a reaction kettle, adding the mixed manganese-iron solution, the first precipitant solution and the second precipitant solution formulated in step S1 into the reaction kettle in parallel current flow under stirring, controlling pH of the reaction system to be 4.0 to 6.5 by adjusting a feeding rate of the second precipitant solution, after a required reaction time is reached, stopping addition of the solution, subjecting the reaction material to solid-liquid separation, washing with pure water, and then spin-drying to obtain a single crystal phase compound ammonium manganese iron phosphate.

Further, in the step S1, a total concentration of manganese salt and iron salt in the mixed manganese-iron solution is 0.5 to 3.0 mol/L; a concentration of the first precipitant in the first precipitant solution is 0.5 to 3.0 mol/L; and a concentration of the second precipitant in the second precipitant solution is 0.5 to 3.0 mol/L.

Further, in the step S2, a rotation speed of the reaction kettle is 200 to 1000 r/min, and a temperature of the reaction kettle is 30 to 80°C.

Further, in the step S2, a feeding rate of the mixed manganese-iron solution is 1000 to 3000 mL/min, and a feeding rate of the first precipitant solution is 500 to 5000 mL/min.

The manganese iron phosphate precursor in the present disclosure is a single crystal phase compound ammonium manganese iron phosphate having a uniform morphology, and the molecular formula thereof is NH₄MnₓFe_{y}PO₄, wherein x + y = 1, 0.01 < x ≤ 0.99, and 0.01 < y ≤ 0.99. The ammonium manganese iron phosphate has a uniform atomic distribution, a specific surface area of 1 to 25 m²/g, a sulfur content of less than or equal to 800 ppm and a molar ratio of (Mn + Fe)/P of 0.96 to 1.04.

The present disclosure also provides a method for preparing lithium manganese iron phosphate, including the following specific preparation steps: step S1, mixing the described prepared ammonium manganese iron phosphate with a first carbon source, wherein the first carbon source is one or more of ascorbic acid, glucose, sucrose, fructose, ribose, polyethylene glycol (PEG), polyvinyl alcohol (PVA) or citric acid, calcinating at 300 to 400°C for 3 to 6 h for deamination and dehydration to obtain manganese iron hydrogen phosphate, and recovering and recycling the removed ammonia; and step S2, mixing the manganese iron hydrogen phosphate with a lithium salt and a second carbon source, wherein the molar ratio Li: (Mn + Fe) of raw materials satisfies (0.8-1.5): 1, the second carbon source is one or more of starch, phenolic resin, soybean lecithin, ascorbic acid, glucose, sucrose, fructose, ribose, polyethylene glycol (PEG), polyvinyl alcohol (PVA) or citric acid, performing sanding treatment, spray drying, and then calcinating at 550 to 900°C for 5 to 15 h to obtain the lithium manganese iron phosphate having a high purity.

Further, in the step S1, the molecular formula of manganese iron hydrogen phosphate is MnₓFe_{y}HPO₄, wherein x + y = 1, 0.01 < x ≤ 0.99, and 0.01 < y ≤ 0.99.

Further, in the step S2, the lithium salt is one or more of lithium carbonate and lithium hydroxide.

Further, in the step S1, the first carbon source is used in an amount of 50 to 90 wt% of the total carbon content; and in the step S2, the second carbon source is used in an amount of 10 to 50 wt% of the total carbon content, and a total amount of carbon in lithium manganese iron phosphate is 1 to 5 wt%.

Yet another aspect of the present disclosure provides use of the lithium manganese iron phosphate provided above as a positive electrode material for preparing a button-type lithium ion battery.

In the present disclosure, a single crystal phase compound ammonium manganese iron phosphate having controllable indicators such as specific surface area, sulfur content, morphology and particle size and uniform element distribution is synthesized by wet co-precipitation of a phosphate salt, a manganese salt, an iron salt, etc., then the ammonium manganese iron phosphate is mixed with a first carbon source and calcinated to obtain manganese iron hydrogen phosphate, and finally the manganese iron hydrogen phosphate is calcinated with a lithium salt and a second carbon source to obtain high-purity lithium manganese iron phosphate having a high compaction density and excellent electrical properties such as capacity and rate performance. The present disclosure has the following advantages and beneficial effects:
1) In the preparation process of ammonium manganese iron phosphate, only manganese salt, iron salt and phosphorus salt necessary for constituting the substance are used, alkaline hazardous chemicals such as ammonia water, ammonium bicarbonate and sodium bicarbonate are not used, and there is no need to introduce further additional impurity elements, and thus the product has a high purity and a low content of impurities such as sulfur, the process is simple and practical and has good reproducibility, uniform atomic dispersion and good processability, and a single crystal phase compound ammonium manganese iron phosphate having an adjustable specific surface area of 1 to 25 m²/g, a sulfur content of less than or equal to 800 ppm and a molar ratio of (Mn+Fe)/P of 0.97 to 1.02 is finally prepared.
2) In the preparation process of manganese iron hydrogen phosphate by deamination and dehydration of ammonium manganese iron phosphate, a first carbon source and ammonium manganese iron phosphate are mixed and calcinated, which can effectively avoid the oxidation of elements such as Mn and Fe, and in the preparation stage of lithium manganese iron phosphate, carbon and other elements that enhance the conductivity of the material are introduced in advance, which can effectively improve the electrochemical properties such as capacity and rate performance of the material while the amount of inert gases such as nitrogen can be significantly reduced, the operation safety can be improved, the costs can be reduced, and the volatile ammonia can be recycled to achieve green production and further reduce costs.
3) The preparation route of the divalent manganese iron phosphate precursor of lithium manganese iron phosphate is simple in process flow and has good reproducibility. A high-flow process is selected, which can improve production capacity and further reduce production costs.
4) Further, by utilizing the reducibility and conductivity of the carbon source, a portion of the carbon source (i.e. the first carbon source) is introduced when preparing manganese iron hydrogen phosphate, and a small portion of the carbon source (i.e. the second carbon source) is introduced when preparing the lithium manganese iron phosphate, which is beneficial to improving the electrochemical properties such as capacity and rate performance, reducing the amount of inert gases, increasing the compaction density, and increasing the energy density.

### Brief Description of the Drawings

Fig. 1 is an SEM image of ammonium manganese iron phosphate prepared in Example 1.
Fig. 2 is an EDS-mapping plot of ammonium manganese iron phosphate prepared in Example 1.
Fig. 3 is an SEM image of ammonium manganese iron phosphate prepared in Example 2.
Fig. 4 is an SEM image of ammonium manganese iron phosphate prepared in Comparative Example 1.

### Detailed Description of the Embodiments

As described in the background, the existing preparation process of ammonium manganese iron phosphate has the problem of excessive use of alkaline hazardous chemicals such as ammonium bicarbonate, sodium bicarbonate and ammonia water, which is not conducive to the industrialization and promotion of the preparation process. In order to solve the described technical problem, a first aspect of the present disclosure provides a method for preparing a manganese iron phosphate precursor. The preparation method including the following steps: step S1, respectively formulating a mixed manganese-iron solution, a first precipitant solution and a second precipitant solution, wherein in the mixed manganese-iron solution, manganese salt is one or more of manganese sulfate, manganese nitrate, manganese chloride or manganese acetate, iron salt is one or more of ferrous sulfate, ferrous nitrate or ferrous chloride, first precipitant is one or more of ammonium dihydrogen phosphate, diammonium hydrogen phosphate or ammonium phosphate, and second precipitant is one or more of ammonium dihydrogen phosphate, diammonium hydrogen phosphate, ammonium phosphate, sodium dihydrogen phosphate, disodium hydrogen phosphate or potassium dihydrogen phosphate; and step S2, adding pure water and the first precipitant solution into a reaction kettle, adding the mixed manganese-iron solution, the first precipitant solution and the second precipitant solution formulated in step S1 into the reaction kettle in parallel current flow under stirring, controlling pH of the reaction system to be 4.0 to 6.5 by adjusting the feeding rate of the second precipitant solution, after a required reaction time is reached, stopping addition of the solution, subjecting the reaction material to solid-liquid separation, washing with pure water, and then spin-drying to obtain a single crystal phase compound ammonium manganese iron phosphate.

The present disclosure uses a co-precipitation method to prepare a divalent manganese iron phosphate precursor, i.e. ammonium manganese iron phosphate. In the preparation process of ammonium manganese iron phosphate, only manganese, iron salt and phosphorus salt necessary for constituting the substance are used, alkaline hazardous chemicals such as ammonia water, ammonium bicarbonate and sodium bicarbonate are not used, and there is no need to introduce further additional impurity elements, and thus the product has a high purity and a low content of impurities such as sulfur, the process is simple and practical and has good reproducibility, uniform atomic dispersion and good processability, and a single crystal phase compound ammonium manganese iron phosphate having an adjustable specific surface area of 1 to 25 m²/g, a sulfur content of less than or equal to 800 ppm and a molar ratio of (Mn+Fe)/P of 0.97 to 1.02 is finally prepared.

Furthermore, the preparation route of the described manganese iron phosphate precursor has a simple process flow and good reproducibility.

In a preferred embodiment, in the step S1, a total concentration of the manganese salt and the iron salt in the mixed manganese-iron solution is 0.5 to 3.0 mol/L; a concentration of the first precipitant in the first precipitant solution is 0.5 to 3.0 mol/L; and a concentration of the second precipitant in the second precipitant solution is 0.5 to 3.0 mol/L. The total concentration of the manganese salt and the iron salt in the mixed manganese-iron solution includes, but is not limited to, the described range. Limiting the total concentration in the described range is beneficial to improving the efficiency of the co-precipitation reaction and the purity of the obtained manganese iron phosphate precursor. The concentrations of the first precipitant and the second precipitant independently include, but are not limited to, the described ranges. Limiting the concentrations in the described ranges is beneficial to improving the efficiency of the co-precipitation reaction and the generation rate of the prepared manganese iron phosphate precursor.

In a preferred embodiment, in the step S2, a rotation speed of the reaction kettle is 200 to 1000 r/min, and a temperature of the reaction kettle is 30 to 80°C. The rotation speed and temperature of the reaction kettle include, but are not limited to, the described ranges, and limiting same in the described ranges is beneficial to improving the efficiency of the co-precipitation reaction, and is beneficial to suppressing side reactions, thereby being beneficial to improving the purity and generation rate of the manganese iron phosphate precursor; moreover, it is also beneficial to regulating and controlling the morphology of the manganese iron phosphate precursor.

In a preferred embodiment, in the step S2, a feeding rate of the mixed manganese-iron solution is 1000 to 3000 mL/min, and a feeding rate of the first precipitant solution is 500 to 5000 mL/min. The feeding rates of the mixed manganese-iron solution and the first precipitant solution include, but are not limited to, the described ranges, and limiting the ranges in the described ranges is beneficial to increasing production capacity and further reducing costs, and is also beneficial to regulating the morphology of the manganese iron phosphate precursor.

In a preferred embodiment, the manganese iron phosphate precursor is a single crystal phase compound ammonium manganese iron phosphate having a uniform morphology, the molecular formula thereof is NH₄MnₓFe_{y}PO₄, wherein x + y = 1, 0.01 < x ≤ 0.99, and 0.01 < y ≤ 0.99, and the ammonium manganese iron phosphate has a uniform atomic distribution, a specific surface area of 1 to 25 m²/g, a sulfur content of less than or equal to 800 ppm, and a molar ratio of (Mn + Fe)/P of 0.96 to 1.04. It should be specially noted that, due to the specificity of the field of manganese iron phosphate precursor materials and limitation of the existing test characterization means, it is difficult to perform a comprehensive quantitative characterization of the complex microstructure of the manganese iron phosphate precursor material obtained above. However, experiments show that the manganese iron phosphate precursor material obtained by the present disclosure has an adjustable specific surface area of 1 to 25 m²/g and low sulfur content, and the (Mn + Fe)/P molar ratio satisfies the described range.

A second aspect of the present disclosure further provides a method for preparing lithium iron manganese phosphate. The preparation method including the following steps: step S1, mixing the ammonium manganese iron phosphate prepared by the described provided method with a first carbon source, wherein the first carbon source is one or more of ascorbic acid, glucose, sucrose, fructose, ribose, polyethylene glycol, polyvinyl alcohol or citric acid, calcinating at 300 to 400°C for 3 to 6 h for deamination and dehydration to obtain manganese iron hydrogen phosphate, and recovering and recycling the removed ammonia; and step S2, mixing the manganese iron hydrogen phosphate with a lithium salt and a second carbon source, wherein the molar ratio Li:(Mn + Fe) of raw materials satisfies (0.8-1.5): 1, the second carbon source is one or more of starch, phenolic resin, soybean lecithin, ascorbic acid, glucose, sucrose, fructose, ribose, polyethylene glycol (PEG), polyvinyl alcohol (PVA) or citric acid, performing sanding treatment, spray drying, and then calcinating at 550 to 900°C for 5 to 15 h to obtain the lithium manganese iron phosphate having a high purity.

In the present disclosure, a single crystal phase compound ammonium manganese iron phosphate having controllable indicators such as specific surface area, sulfur content, morphology and particle size and uniform element distribution is synthesized by wet co-precipitation of a phosphate salt, a manganese salt, an iron salt, etc., then the ammonium manganese iron phosphate is mixed with a first carbon source and calcinated to obtain manganese iron hydrogen phosphate, and finally the manganese iron hydrogen phosphate is calcinated with a lithium salt and a second carbon source to obtain high-purity lithium manganese iron phosphate having a high compaction density and excellent electrical properties such as capacity and rate performance.

In the preparation process of manganese iron hydrogen phosphate by deamination and dehydration of ammonium manganese iron phosphate, a first carbon source and ammonium manganese iron phosphate are mixed and calcinated, which can effectively avoid the oxidation of elements such as Mn and Fe, and in the preparation stage of lithium manganese iron phosphate, carbon and other elements that enhance the conductivity of the material are introduced in advance, which can effectively improve the electrochemical properties such as capacity and rate performance of the material while the amount of inert gases such as nitrogen can be significantly reduced, the operation safety can be improved, the costs can be reduced, and the volatile ammonia can be recycled to achieve green production and further reduce costs.

Further, by utilizing the reducibility and conductivity of the carbon source, a portion of the carbon source (i.e. the first carbon source) is introduced when preparing manganese iron hydrogen phosphate, and a small portion of the carbon source (i.e. the second carbon source) is introduced when preparing the lithium manganese iron phosphate, which is beneficial to improving the electrochemical properties such as capacity and rate performance, reducing the amount of inert gases, increasing the compaction density, and increasing the energy density.

By controlling the ratio of raw materials within the described range, manganese iron hydrogen phosphate having specific element contents can be obtained. In a preferred embodiment, the molecular formula of the manganese iron hydrogen phosphate is MnₓFe_{y}HPO₄, wherein x + y = 1, 0.01 < x≤ 0.99, and 0.01 < y ≤ 0.99.

The present disclosure uses a lithium salt commonly used in the art. In a preferred embodiment, the lithium salt is one or more of lithium carbonate and lithium hydroxide.

In a preferred embodiment, the first carbon source is used in an amount of 50 to 90 wt% of the total carbon amount, the second carbon source is used in an amount of 10 to 50 wt% of the total carbon amount, and a total carbon amount in the lithium manganese iron phosphate is 1 to 5 wt%. The first carbon source, the second carbon source and the total carbon amount in the lithium manganese iron phosphate independently include, but are not limited to, the described ranges, and limiting same to the described ranges is beneficial to improving the conductivity of the material, improving the electrochemical properties such as capacity, rate performance and energy density of the material, reducing the amount of inert gases used, and improving operational safety.

A third aspect of the present disclosure further provides use of the lithium manganese iron phosphate prepared according to the described method as a positive electrode material for preparing a button-type lithium ion battery. In the present disclosure, by means of the described wet co-precipitation, a single crystal phase compound ammonium manganese iron phosphate having controllable indicators such as specific surface area, sulfur content, morphology and particle size and uniform element distribution is synthesized, then the ammonium manganese iron phosphate is mixed with a first carbon source and calcinated to obtain manganese iron hydrogen phosphate, and finally the manganese iron hydrogen phosphate is calcinated with a lithium salt and a second carbon source to obtain high-purity lithium manganese iron phosphate having a high compaction density and excellent electrical properties such as capacity and rate performance. Using the lithium manganese iron phosphate prepared by the described method as a positive electrode material to prepare a button-type battery can improve the electrochemical properties such as capacity, rate performance and energy density of the button-type battery.

The described content of the present disclosure is further described in detail through the following examples, but it should not be understood that the scope of the described subject matter of the present disclosure is limited to the following examples, and all the technologies implemented based on the described content of the present disclosure belong to the scope of the present disclosure.

It should be noted that, in the present disclosure, the materials obtained in the Examples and Comparative Examples are used as positive electrode materials to assemble CR2016 button-type batteries, wherein a lithium sheet is used as the negative electrode, and lithium hexafluorophosphate is used as the electrolyte (the solvent is mainly ethylene carbonate), and the thickness of the CR2016 button-type batteries is 1.6 mm, and the bottom diameter is 20 mm.

### Example 1

Step S1, manganese sulfate and ferrous sulfate were used to formulate a mixed manganese-iron solution having a total concentration of 2.0 mol/L, ammonium dihydrogen phosphate was used to formulate a first precipitant solution having a concentration of 2.0 mol/L, and diammonium hydrogen phosphate was used to formulate a second precipitant solution having a concentration of 2.0 mol/L.

Step S2, purified water and 100% experiment amount of the first precipitant solution were added into a reaction kettle, the rotation speed of the reaction kettle was set to be 1000 r/min, and the temperature of the reaction kettle was set to be 40°C.

Step S3: the mixed manganese-iron solution was added to the reaction kettle at a feeding rate of 3000 mL/min and the first precipitant was added at a feeding rate of 3000 mL/min in parallel current flow, the second precipitant solution was added into the reaction kettle at a certain feeding rate at the same time, and the pH of the reaction system was controlled to be 4.2 to 4.3 by adjusting the feeding rate of the second precipitant solution.

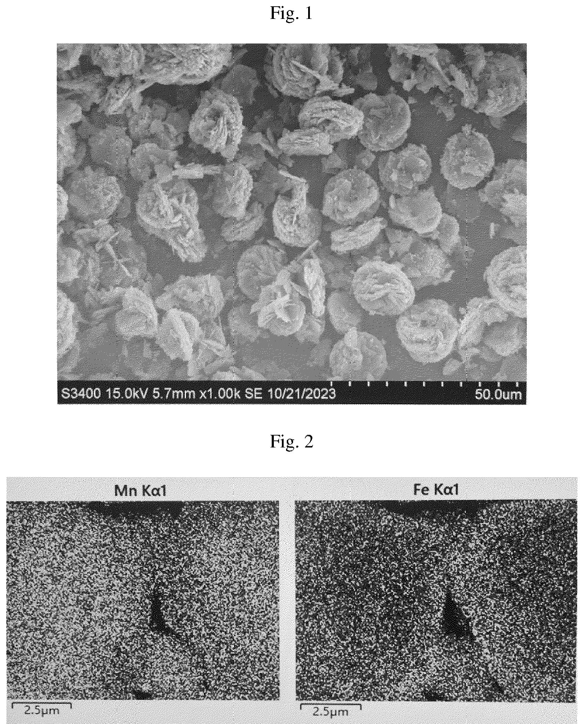

Step S4, after reacting for 30 min, solution feeding was stopped, the reaction materials were subjected to solid-liquid separation and washed with pure water, and the temperature of the pure water was 25°C, so as to obtain a single crystal phase compound ammonium manganese iron phosphate NH₄Mn_{0.6}Fe_{0.4}PO₄ which had a uniform atomic distribution (as shown in Fig. 1 and Fig. 2), good processability, a specific surface area of 10.14 m²/g, a sulfur content of 524 ppm and a molar ratio of (Mn + Fe)/P of 0.99.

Step S5, the ammonium manganese iron phosphate was mixed with glucose accounting for 70 wt% of the total carbon content, the mixture was calcinated at 380°C for 3 h for deamination and dehydration to obtain manganese iron hydrogen phosphate, and the removed ammonia was recovered and recycled.

Step S6, the manganese iron hydrogen phosphate was mixed with lithium carbonate and citric acid accounting for 30 wt% of the total carbon content, where the molar ratio Li:(Mn + Fe) of raw materials satisfies 1.05:1, the mixture was subjected to sand grinding treatment and spray drying and was then calcinated at 800°C for 6 h, and the cooled material was screened with a 325 mesh ultrasonic vibration sieve to obtain high-purity lithium manganese iron phosphate, where the total carbon content of the lithium manganese iron phosphate was 2 wt%.

The lithium manganese iron phosphate was used as a positive electrode material to assemble a CR2016 button-type battery, the first discharge capacity was 158 mAh/g at 0.1C, and the first-cycle discharge capacity was 149 mAh/g at a high rate of 1C.

### Example 2

Step S1, manganese acetate and ferrous sulfate were used to formulate a mixed manganese-iron solution having a total concentration of 3.0 mol/L, ammonium dihydrogen phosphate and diammonium hydrogen phosphate were used to formulate a first precipitant solution having a total concentration of 3.0 mol/L, and ammonium phosphate was used to formulate a second precipitant solution having a concentration of 2.0 mol/L.

Step S2, purified water and 50% experiment amount of the first precipitant solution were added into a reaction kettle, the rotation speed of the reaction kettle was set to be 400 r/min, and the temperature of the reaction kettle was set to be 70°C.

Step S3: the mixed manganese-iron solution was added to the reaction kettle at a feeding rate of 1000 mL/min and the first precipitant solution was added at a feeding rate of 800 mL/min in parallel current flow, the second precipitant solution was added into the reaction kettle at a certain feeding rate at the same time, and the pH of the reaction system was controlled to be 6.1 to 6.2 by adjusting the feeding rate of the second precipitant solution.

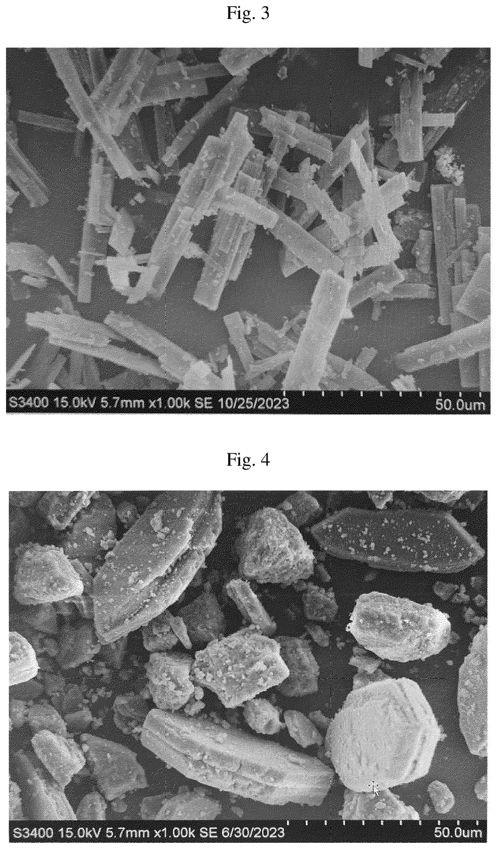

Step S4, after reacting for 60 min, solution feeding was stopped, the reaction materials were subjected to solid-liquid separation and washed with pure water, and the temperature of the pure water was 60°C, so as to obtain a single crystal phase compound ammonium manganese iron phosphate NH₄Mn_{0.6}Fe_{0.4}PO₄ which had a uniform atomic distribution (as shown in Fig. 3), good processability, a specific surface area of 20.88 m²/g, a sulfur content of 435 ppm and a molar ratio of (Mn + Fe)/P of 0.98.

Step S5, the ammonium manganese iron phosphate was mixed with glucose accounting for 80 wt% of the total carbon content, the mixture was calcinated at 320°C for 4 h for deamination and dehydration to obtain manganese iron hydrogen phosphate, and the removed ammonia was recovered and recycled.

Step S6, the manganese iron hydrogen phosphate was mixed with lithium carbonate and sucrose accounting for 20 wt% of the total carbon content, where the molar ratio Li:(Mn + Fe) of raw materials satisfies 1.2:1, the mixture was subjected to sand grinding treatment and spray drying and was then calcinated at 600°C for 10 h, and the cooled material was screened with a 325 mesh ultrasonic vibration sieve to obtain high-purity lithium manganese iron phosphate, where the total carbon content of the lithium manganese iron phosphate was 1 wt%.

The lithium manganese iron phosphate was used as a positive electrode material to assemble a CR2016 button-type battery, the first discharge capacity was 163 mAh/g at 0.1C, and the first-cycle discharge capacity was 154 mAh/g at a high rate of 1C.

### Example 3

The difference from Example 1 lies in that: in step S3, the feeding rate of the first precipitant solution was 5000 mL/min, and the second precipitant solution was added into the reaction kettle at a certain feeding rate, so that the pH of the reaction system was 4.0.

### Example 4

The difference from Example 1 lies in that: in step S3, the feeding rate of the mixed manganese-iron solution was 1000 mL/min, the feeding rate of the first precipitant solution was 500 mL/min, and the second precipitant solution was added into the reaction kettle at a certain feeding rate, so that the pH of the reaction system was 6.5.

### Example 5

The difference from Example 1 lies in that: in step S1, the total concentration of the manganese salt and the iron salt was 0.5 mol/L, the concentration of the first precipitant in the first precipitant solution was 0.5 mol/L, and the concentration of the second precipitant in the second precipitant solution was 1.0 mol/L.

### Example 6

The difference from Example 1 lies in that: in step S1, the total concentration of the manganese salt and the iron salt was 0.5 mol/L, the concentration of the first precipitant in the first precipitant solution was 0.7 mol/L, and the concentration of the second precipitant in the second precipitant solution was 0.5 mol/L.

### Example 7

The difference from Example 1 lies in that: in step S1, the total concentration of the manganese salts and the iron salt was 0.3 mol/L, the concentration of the first precipitant in the first precipitant solution was 0.3 mol/L, and the concentration of the second precipitant in the second precipitant solution was 0.3 mol/L.

### Example 8

The difference from Example 1 lies in that: in step S2, the rotation speed of the reaction kettle was 200 r/min, and the temperature of the reaction kettle was 80°C.

### Example 9

The difference from Example 1 lies in that: in step S2, the temperature of the reaction kettle was 30°C.

### Example 10

The difference from Example 1 lies in that: in step S2, the temperature of the reaction kettle was 25°C.

### Example 11

The difference from Example 1 lies in that: in step S5, the calcination temperature was 300°C, and the calcination time was 6 h.

### Example 12

The difference from Example 1 lies in that: in step S5, the calcination temperature was 400°C, and the calcination time was 3 h.

### Example 13

The difference from Example 1 lies in that: in step S5, the calcination temperature was 270°C, and the calcination time was 2.5 h.

### Example 14

The difference from Example 1 lies in that: in step S5, the amount of the first carbon source was 50 wt% of the total carbon content, and in step S6, the amount of the second carbon source was 50 wt% of the total carbon content.

### Example 15

The difference from Example 1 lies in that: in step S5, the amount of the first carbon source was 90 wt% of the total carbon content, and in step S6, the amount of the second carbon source used was 10 wt% of the total carbon content.

### Comparative Example 1

Step S1, manganese sulfate and ferrous sulfate were used to formulate a mixed manganese-iron solution having a total concentration of 2.0 mol/L, and ammonium dihydrogen phosphate was used to formulate a precipitant solution having a concentration of 2.0 mol/L.

Step S2, purified water was added into a reaction kettle, the rotation speed of the reaction kettle was set to be 1000 r/min, and the temperature of the reaction kettle was set to be 40°C.

Step S3: the mixed manganese-iron solution was added to the reaction kettle at a feeding rate of 3000 mL/min and the precipitant solution was added at a feeding rate of 3000 mL/min in parallel current flow, ammonia water having a concentration of 8 mol/L was added into the reaction kettle at a certain feeding rate in parallel current flow at the same time, and the pH of the reaction system was controlled to be 4.2 to 4.3 by adjusting the feeding rate of the ammonia water.

Step S4, after reacting for 30 min, solution feeding was stopped, the reaction materials were subjected to solid-liquid separation and washed with pure water, and the temperature of the pure water was 25°C, so as to obtain ammonium manganese iron phosphate NH₄Mn_{0.6}Fe_{0.4}PO₄ which had a nonuniform atomic distribution (as shown in Fig. 4), thick flakes, poor processability, a specific surface area of 0.33 m²/g, a sulfur content of 1800 ppm and a molar ratio of (Mn + Fe)/P of 1.05.

Step S5, the ammonium manganese iron phosphate was calcinated in a nitrogen atmosphere at 380°C for 3 h for deamination and dehydration to obtain manganese iron hydrogen phosphate, and the removed ammonia was recovered and recycled.

Step S6, the manganese iron hydrogen phosphate was mixed with lithium carbonate and glucose, wherein the molar ratio Li:(Mn + Fe) of raw materials satisfies 1.05:1, the mixture was subjected to sand grinding treatment and spray drying and was then calcinated at 800°C for 6 h, and the cooled material was screened with a 325 mesh ultrasonic vibration sieve to obtain high-purity lithium manganese iron phosphate, wherein the total carbon content of the lithium manganese iron phosphate was 2 wt%.

The lithium manganese iron phosphate was used as a positive electrode material to assemble a CR2016 button-type battery, the first discharge capacity was 142 mAh/g at 0.1C, and the first-cycle discharge capacity was 131 mAh/g at a high rate of 1C.

### Comparative Example 2

The difference from Example 1 lies in that: in step S3, the feeding rate of the mixed manganese-iron solution was 4000 mL/min, the feeding rate of the first precipitant solution was 6000 mL/min, and the second precipitant solution was added into the reaction kettle at a certain feeding rate, so that the **pH** of the reaction system was 3.6.

### Comparative Example 3

The difference from Example 1 lies in that: the first carbon source was not added in step S5.

### Comparative Example 4

The difference from Example 1 lies in that: the second carbon source was not added in step S6.

The specific surface area of the ammonium manganese iron phosphate prepared by all the described Examples and Comparative Examples was measured by using a reference method for solid standard sample; the sulfur content of the ammonium manganese iron phosphate prepared by all the described Examples and Comparative Examples was measured by using inductively coupled plasma emission spectrometry; and the (Mn + Fe)/P molar ratio of the ammonium manganese iron phosphate prepared by all the described Examples and Comparative Examples was measured by chemical titration method. The CR2016 button-type batteries prepared in all the described Examples and Comparative Examples were tested for electrochemical properties.

The test results are shown in Table 1.

**Table 1**

| | Specific surface area (m²/g) | Sulfur content (ppm) | (Mn + Fe)/P molar ratio | First discharge capacity at 0.1C (mAh/g) | First-cycle discharge capacity at 1C (mAh/g) |
|---|---|---|---|---|---|
| Example 1 | 10.14 | 524 | 0.99 | 158 | 149 |
| Example 2 | 20.88 | 435 | 0.98 | 163 | 154 |
| Example 3 | 8.79 | 564 | 0.96 | 157 | 147 |
| Example 4 | 22.13 | 397 | 0.97 | 161 | 151 |
| Example 5 | 12.44 | 460 | 0.98 | 160 | 152 |
| Example 6 | 13.13 | 455 | 0.98 | 160 | 153 |
| Example 7 | 0.27 | 736 | 1.05 | 149 | 141 |
| Example 8 | 23.11 | 405 | 0.97 | 163 | 155 |
| Example 9 | 5.79 | 559 | 0.98 | 159 | 149 |
| Example 10 | 0.96 | 830 | 1.03 | 147 | 138 |
| Example 11 | 7.57 | 535 | 0.99 | 158 | 146 |
| Example 12 | 10.96 | 518 | 0.98 | 162 | 152 |
| Example 13 | 9.77 | 570 | 1.00 | 140 | 125 |
| Example 14 | 12.22 | 510 | 0.97 | 156 | 148 |
| Example 15 | 11.85 | *505* | 0.96 | 158 | 148 |
| Comparative Example 1 | 0.33 | 1800 | 1.05 | 142 | 131 |
| Comparative Example 2 | 1.69 | 2164 | 1.08 | 138 | 126 |
| Comparative Example 3 | 10.88 | 535 | 1.01 | 144 | 134 |
| Comparative Example 4 | 9.98 | 531 | 1.00 | 145 | 136 |

The examples above describe the basic principle, main features and advantages of the present disclosure. A person skilled in the art should understand that the present disclosure is not limited to the examples above. The examples above and the description merely describe the principle of the present disclosure. Without departing from the principle of the present disclosure, the present disclosure also has various changes and improvements, and these changes and improvements all fall within the scope of protection of the present disclosure.

## Claims

1. A method for preparing a manganese iron phosphate precursor, comprising the following specific preparation steps:
step S1, respectively formulating a mixed manganese-iron solution, a first precipitant solution and a second precipitant solution, wherein in the mixed manganese-iron solution, manganese salt is one or more of manganese sulfate, manganese nitrate, manganese chloride or manganese acetate, iron salt is one or more of ferrous sulfate, ferrous nitrate or ferrous chloride, first precipitant is one or more of ammonium dihydrogen phosphate, diammonium hydrogen phosphate or ammonium phosphate, and second precipitant is one or more of ammonium dihydrogen phosphate, diammonium hydrogen phosphate, ammonium phosphate, sodium dihydrogen phosphate, disodium hydrogen phosphate or potassium dihydrogen phosphate;
step S2, adding pure water and the first precipitant solution into a reaction kettle, adding the mixed manganese-iron solution, the first precipitant solution and the second precipitant solution formulated in step S1 into the reaction kettle in parallel current flow under stirring, controlling pH of reaction system to be 4.0 to 6.5 by adjusting the feeding rate of the second precipitant solution, after a required reaction time is reached, stopping addition of the solution, subjecting reaction material to solid-liquid separation, washing with pure water, and then spin-drying to obtain a single crystal phase compound ammonium manganese iron phosphate.

2. The method for preparing a manganese iron phosphate precursor according to claim 1, wherein in the step S1, a total concentration of the manganese salt and the iron salt in the mixed manganese-iron solution is 0.5 to 3.0 mol/L; a concentration of the first precipitant in the first precipitant solution is 0.5 to 3.0 mol/L; and a concentration of the second precipitant in the second precipitant solution is 0.5 to 3.0 mol/L.

3. The method for preparing a manganese iron phosphate precursor according to claim 1, wherein in the step S2, a rotation speed of the reaction kettle is 200 to 1000 r/min, and a temperature of the reaction kettle is 30 to 80°C.

4. The method for preparing a manganese iron phosphate precursor according to claim 1, wherein in the step S2, a feeding rate of the mixed manganese-iron solution is 1000 to 3000 mL/min, and a feeding rate of the first precipitant solution is 500 to 5000 mL/min.

5. The method for preparing a manganese iron phosphate precursor according to claim 1, wherein the manganese iron phosphate precursor is the single crystal phase compound ammonium manganese iron phosphate having a uniform morphology, the molecular formula thereof is NH₄MnₓFe_{y}PO₄, wherein x + y = 1, 0.01 < x ≤ 0.99, and 0.01 < y ≤ 0.99, and the ammonium manganese iron phosphate has a uniform atomic distribution, a specific surface area of 1 to 25 m²/g, a sulfur content of less than or equal to 800 ppm and a molar ratio of (Mn+Fe)/P of 0.96 to 1.04.

6. A method for preparing lithium manganese iron phosphate, comprising the following specific preparation steps:
step S1, mixing the ammonium manganese iron phosphate prepared by the method of any one of claims 1-5 with a first carbon source, wherein the first carbon source is one or more of ascorbic acid, glucose, sucrose, fructose, ribose, polyethylene glycol, polyvinyl alcohol or citric acid, calcinating at 300 to 400°C for 3 to 6 h for deamination and dehydration to obtain manganese iron hydrogen phosphate, and recovering and recycling the removed ammonia;
step S2, mixing the manganese iron hydrogen phosphate with a lithium salt and a second carbon source, wherein the molar ratio Li:(Mn + Fe) of raw materials satisfies (0.8-1.5): 1, the second carbon source is one or more of starch, phenolic resin, soybean lecithin, ascorbic acid, glucose, sucrose, fructose, ribose, polyethylene glycol, polyvinyl alcohol or citric acid, performing sanding treatment, spray drying, and then calcinating at 550 to 900°C for 5 to 15 h to obtain the lithium manganese iron phosphate.

7. The method for preparing lithium manganese iron phosphate according to claim 6, wherein the molecular formula of the iron manganese hydrogen phosphate is MnₓFe_{y}HPO₄, wherein x + y = 1, 0.01 < x ≤ 0.99, and 0.01 < y ≤ 0.99.

8. The method for preparing lithium manganese iron phosphate according to claim 6, wherein the lithium salt is one or more of lithium carbonate and lithium hydroxide.

9. The method for preparing lithium manganese iron phosphate according to claim 6, wherein the first carbon source is used in an amount of 50 to 90 wt% of the total carbon content, the second carbon source is used in an amount of 10 to 50 wt% of the total carbon content, and a total carbon content in the lithium manganese iron phosphate is 1 to 5wt%.

10. Use of the lithium manganese iron phosphate prepared by the method according to claim 6 as a positive electrode material for preparing a button-type lithium ion battery.
